# EUROPEAN PATENT APPLICATION

(11) **EP 4 316 315 A1**
(43) Date of publication of application: **07.02.2024**
(21) Application number: 22188487.7
(22) Date of filing: 03.08.2022
(51) Int. Cl.: A47J 27/14, A47J 37/12

(54) **AUTOMATIC COOKER**

(71) Applicant: Electrolux Professional S.p.A., 33170 Pordenone (IT)
(72) Inventor: LIMANI, Marco, Pordenone (PN) (IT); TURRIN, Daniele, Pordenone (PN) (IT); BENVENUTI, Davide, Pordenone (PN) (IT); GALLO, Giandomenico, Pordenone (PN) (IT)
(74) Representative: Fiammenghi, Eva

(57) **Abstract**

A modular cooking apparatus (100) and a method (1100) for controlling a modular cooking apparatus are provided. The modular cooking apparatus comprises a dispensing module (110), a cooking module (120), a cooked food storage module (130), a transportation module (140) and a control unit (150). The transportation module comprises a conveying module (141) and an operating arm (145). The operating arm comprises engaging means (146) for releasably engaging a product container (125) of the cooking module for moving the product container between the modules of the modular cooking apparatus.

## Description

### TECHNICAL FIELD

The present invention relates to the technical field of cooking appliances. In particular, the present invention relates to the technical field of automatic cookers for professional environments.

### BACKGROUND

Professional kitchens, such as restaurant kitchen, fast food kitchens or the like, often have large equipment for cooking and preparing food products. Examples of such equipment are deep fat fryers, refrigerators and holding units for keeping prepared food warm.

Many cooking appliances include one or more manual steps, which may cause a number of problems. For example, for deep fat fryers or larger pasta cookers the operator may need to estimate or guess the amount of food product to be cooked for a certain number of portions. This may cause the food to be over or undercooked. Further, manually having to move containers containing the food product between different cooking appliances can be time consuming and intrusive to the kitchen environment.

Further, since food products are often cooked in a medium such as water or oil with high temperatures, the risk for burns or injuries is present when having to manually operate the cooking appliances. This risk is increased when a product container, such as a frying basket, is full. This since it can be heavy and hard to lift manually.

There is a need in the field for cooking appliances that provide new solutions to problems seen in the prior art.

### SUMMARY

The inventors have reached the insight that there is a need for an automatic cooker or automatic cooking system that at least partially solves the problems stated above. In particular, there is a need for an automatic cooker that can easily be placed in a restaurant environment and automatically produce prepared food products to be served to customers. Further, it is envisioned to provide a system with a high modularity in order to be able to adapt to customer needs.

The present disclosure provides a modular cooking apparatus and a method for controlling a modular cooking apparatus in the independent claims that at least partially mitigates the above-mentioned drawbacks. Preferred embodiments are defined in the dependent claims. Hence, according to a first aspect of the present disclosure, there is provided a modular cooking apparatus for automatically preparing food products. The modular cooking apparatus comprises at least one dispensing module configured to store food products to be prepared and to dispense an amount of food products. The modular cooking apparatus further comprises at least one cooking module configured to prepare the food products. The at least one cooking module comprises a cooking container configured to hold a cooking medium and a product container configured to hold food product and to be at least partially submerged in the cooking container and the cooking medium in order to prepare the food products. The modular cooking apparatus further comprises at least one cooked food storage module configured to receive and store the prepared food products. Further, the modular cooking apparatus comprises a transportation module. The transportation module comprises a conveying module extending between the at least one dispensing, cooking and cooked food storage module. The transportation module further comprises an operating arm movably arranged along the conveying module. The operating arm comprises an engaging means for releasably engaging the product container for moving the product container between the at least one dispensing, cooking and cooked food storage module. The modular cooking apparatus further comprises a control unit configured to control a food preparation process of the food product by controlling an operation of all or some of the at least one dispensing, cooking, cooked food storage and transportation modules.

In a second aspect of the present disclosure, there is provided a method for preparing food products. The method being implemented in a control unit of a modular cooking apparatus. The method comprises the step of receiving an indication to start a food preparation process. The method further comprises the step of causing an operating arm to engage a product container and move the product container to a dispensing module. Further, the method comprises the step of causing the dispensing module to dispense an amount of food products into the product container. The method further comprises causing the operating arm to move the product container to a cooking module and at least partially submerge the product container in a cooking medium of a cooking container of the cooking module. Further, the method comprises causing the operating arm to move the product container out of the cooking container and from the cooking module to a cooked food storage module. The method also comprises causing the operating arm to deposit the food products in the cooked food storage module.

By "dispensing module" is herein meant a module that can dispense or dose an amount of food product. The dispensing module may for example be a refrigerator or freezer storing pasta, frozen or fresh french-fries or other food products to be cooked. The dispensing module may then be able to dispense an amount of the stored food product into the product container, this may for example be controlled by the control unit.

By "cooking module" is herein meant a module where the food products are prepared. The cooking module of the present disclosure includes a "cooking container" with a "cooking medium". The cooking container may for example be a basin filled with a heated cooking medium, such as oil or water. The product container, for example a frying basket or similar, may then be submerged in the cooking medium in order to cook the food products.

By "cooked food storage module" is herein meant a module where cooked food may be stored temporarily before being served to a customer. The module may also be referred to as a stowing, holding or keeping unit or module where food product prepared in by the cooking module may be stored momentarily before being handed out for serving.

By "food preparation process" is herein meant a process used in order to prepare food. Depending on what food products to be cooked the food preparation process may vary. For example, the modular cooking apparatus may be configured to cook pasta and the food preparation process may therefore be adjusted for pasta and as an example leave the pasta in the cooking medium for a predetermined time. As another example, the cooking module may be a deep fat fryer and the modular cooking apparatus may be configured to prepare fried food. In such an embodiment, the food preparation process may be different.

The "control unit" may be any type of control unit. It may for example be a computer connected to a touchscreen display for user input. The touchscreen display may be located anywhere and may be part of the modular cooking apparatus or a separate module. For example, a touchscreen display may be placed on one of the modules of the modular cooking apparatus for allowing easy access by a user.

Thus, there is provided a modular cooking apparatus and a method for controlling the modular cooking apparatus with a function to provide an automatic kitchen appliance for restaurants and other professional environments. Today's kitchen equipment often includes one or more manual steps which may bring different problems. For example, in case the loading or dosing is done manually the amount, volume or mass of food product may vary. This may cause the food product to be under or over cooked by the cooking module. By allowing for an automatic dispensing of food product this problem can be mitigated. Further, by removing the manual step of lowering and raising of the product container into and out of the cooking medium, the risk of being hurt by the warm cooking medium is lowered. Further, the modular cooking apparatus can be covered by one or more doors, for example by a see-through material such as glass, to further mitigate the risk for the employers to get hurt by the equipment. Further advantages include labor cost reduction and higher efficiency since the modular cooking apparatus can prepare the food product automatically. The cooking apparatus is further modular, meaning that more than one module of the different modules may be used and added to the cooking apparatus. This is advantageous since the customer needs may be easily met. For example, more than one cooking module or dispensing module may be used. Also, it is understood that the cooking module may have more than one cooking container and/or more than one product container and that the operating arm may be configured to releasably engage with each of the product containers to move them and prepare multiple food product simultaneously or in a specific order. According to an embodiment, the conveying module comprises a belt conveyor configured to move the operating arm in a first, substantially horizontal, direction. Further, or additionally, the conveying module may comprise a linear actuator configured to move the operating arm in a second, substantially vertical, direction, and where the operating arm is attached to the linear actuator. The present embodiment brings advantages in that the operating arm can be easily moved in at least one direction. Moving the operating arm in a substantially horizontal direction, i.e. the first direction, allows the arm to move between the different modules of the modular cooking apparatus. And by allowing the operating arm to be moved substantially vertically, i.e. in the second direction, the operating arm can for example be raised or lowered in order to engage or release the product container and to place the product container in the cooking medium. In this embodiment, the horizontal movement of the operating arm may be actuated by a conveying belt connected to the operating arm. The conveying belt may be moved by any conventional means, for example by an electrical motor. The linear actuator may be any linear actuator adapted to cause the operating arm to move in the second direction. For example, it may be a vertical metal bar that is moved through a screwing motion which is more commonly known as a rack and pinion linear actuator. A rack and pinion actuator comprises a circular gear (or screw like solution) and a linear gear where the circular gear translates the movement to the linear gear which then could move the operating arm. The circular gear motion may be controlled by any suitable means, for example by an electrical motor. The motors may in turn be controlled by the control unit in order to automate the movements.

According to an embodiment, the transportation module further comprises a second belt conveyor configured to rotate the operating arm about a rotational axis. The operating arm will be used to releasably engage a product container that will be filled with food products. There are several benefits with the possibility to rotate the operating arm, and thusly the product container. For example, the operating arm can be caused to rotate back and forth, causing the product container to shake, when the product container is submerged in the cooking medium in order to ensure that the food product do not stick together while cooking. This can for example ensure a crispier frying in case the cooking module is a deep fat fryer. Further, when lifting the product container, it may be advantageous to cause the operating arm to rotate back and forth in order to make the product container to release any cooking medium following the food product. This can ensure that the cooking medium is preserved in the cooking container longer which is economical. Further, when moving the product container to the cooked food storage module causing the operating arm to rotate in order to release the food product is an advantageous way of unloading the product container. The belt conveyor may be connected to any driving means, for example an electrical motor for driving the belt and thusly the rotation of the operating arm and if currently engaged, also the product container.

According to an embodiment, the operating arm further comprises a food product conveying means configured to guide food products. The food product conveying means may be any structure connected to the operating arm configured to guide the food product in any step of the food preparing process. For example, the food product may be guided by the food product conveying means when discharging the food product from the dispensing module, or when discharging or unloading the food product in the cooked food storage module. When rotating the operating arm it may be advantageous to have a food product conveying means guiding the food product out of the product container and into the cooked food storage module.

According to an embodiment, the second belt conveyor of the conveying means is configured to rotate the operating arm about the rotational axis such that food product in the product container is guided out from the product container through the food product conveying means. In this embodiment, the food product conveying means may for example be a formed metal sheet that allows the food product to be guided into the cooked food storage module. Since the rotation for depositing the food product may be the same in every situation, the food product conveying means does not necessarily have to be a full pipe or a closed construction. The food product conveying means may for example be a bent metal sheet creating a U-form so that the when the food product can be guided through. Depending on the form of the food product conveying means it may further bring the advantage of shielding from possible splashes of the cooking medium when raising and lowering the product container.

According to an embodiment, the transportation module is arranged behind the other modules. By arranging the transportation module behind the other modules the operating arm can be configured to extend into the other modules to move the product container back and forth within the modules. By arranged the transportation module behind the other modules the modular cooking apparatus is less intrusive in the kitchen environment which is advantageous.

According to an embodiment, the dispensing module, cooking module and cooked food storage module are arranged along an axis A. The cooking module is arranged next to the dispensing module and the cooked food storage module is arranged next to the cooking module along the axis A. The present embodiment is merely an example to show the benefits of placing the different modules at least partially next to each other along an axis. The placement allows for the operating arm to be moved easily between the modules and also ensures that the distance the arm needs to be moved between each step of the food preparation process is as small as possible.

According to an embodiment, the dispensing module comprises a measuring means configured to measure and dispense a predetermined amount of the food product. The present embodiment is advantageous since the operator does not need to manually dispense the food product and the amount of food product will be exactly dosed. The measuring means may be any means for measuring, for example a scale measuring a portion by weight or means for measuring a volume of a product. It is further envisioned that an operator can input an amount to be dispensed, for example by a number of portions, a certain volume or weight.

According to an embodiment, the measuring means includes a dosing space, a first hatch arranged at a top of the dosing space configured to be opened in order to allow food product to enter into the dosing space, and a second hatch arranged at a bottom of the dosing space configured to be opened to allow food product to leave the dosing space. It is further envisioned that the dosing space could be adjusted for different volumes and being able to dose and measure different amounts of food product. Further, the hatches of the measuring means may be made of any suitable material. As an example, the first hatch may be made out of a combination of materials and at least one softer material, such as rubber, placed near the edge of the dosing space in order to not break the food product when closing.

According to an embodiment, the dispensing module further comprises refrigeration means configured to refrigerate the food products. Depending on the food product to be prepared it may be advantageous to include a refrigeration means. The refrigeration means may be configured to chill or freeze the food product and act either as a refrigerator or freezer. For example, this embodiment is advantageous for freezer to fryer products such as french-fries. According to an embodiment, the operating arm comprises at least one magnet configured to engage the product container. The magnet may be any type of magnet, for example a permanent magnet, electromagnet or electropermanent magnet. The present embodiment is advantageous since it brings an easy way of engaging releasably with the product container in order to move it through the different modules. Further details regarding different embodiments will be described in relation to the figures.

According to an embodiment, the at least one cooking module is two or more cooking modules, and/or the at least one cooked food storage module is two or more cooked food storage modules, and/or the at least one dispensing module is two or more dispensing modules. The modular cooking apparatus is modular and can be adapted to the needs of a specific customer or kitchen and it is advantageous if the different modules can be multiple modules. For these modules it is envisioned that the transportation module is adapted so that it can move the operating arm between and inside each of the modules of the modular cooking apparatus. Having multiple modules may ensure that the modular cooking apparatus can prepare many different types of food. For example, the modular cooking apparatus can prepare different kind of fried foods such as onion rings and french-fries. By having two cooked food storage modules the onion rings can be deposited in one and the french-fries in the other.

According to an embodiment, the at least one cooked food storage module comprises a first slanted surface configured to receive the prepared food product from the product container and guide it towards a second slanted surface. The second slanted surface is configured to guide the prepared food product to a service area. The present embodiment is advantageous in that the relation between the slanted surfaces may be so that the prepared food product arrives at the service area in the order it is placed in the cooked food storage module. This ensure the principle of first in, first out and ensures that less food goes to waste which is advantageous in many aspects. The cooked food storage module may further comprise a seasoning module. The seasoning module may be arranged above the first slanted surface and be adapted to dispense seasoning onto the prepared food product as it is dispensed onto the first slanted surface.

According to an embodiment, the operating arm is rotatable about a rotational axis and the step of causing the operating arm to deposit the food product in the cooked food storage module is by rotation about the axis RA. The present embodiment is advantageous in that the newly prepared food can be deposited easily by the operating arm.

According to an embodiment, the method may comprise the step of causing the operating arm to shake the at least one product container such that food products held in the at least one product container are prevented from sticking to each other. The method may also include the step of causing the operating arm to shake the at least one product container, such that an excess amount of cooking medium is removed from the prepared food product.

It is noted that other embodiments using all possible combinations of features recited in the above described embodiments may be envisaged. Thus, the present disclosure also relates to all possible combinations of features mentioned herein. Any embodiment described herein may be combinable with other embodiments also described herein, and the present disclosure relates to all combinations of features.

### BRIEF DESCRIPTION OF THE DRAWINGS

Exemplifying embodiments will now be described in more detail, with reference to the following appended drawings:
Figures 1, 2 and 3 schematically illustrates modular cooking apparatuses in accordance with embodiments of the present invention.
Figures 4a, 4b, 4c, 4d schematically illustrates dispensing modules according to the present invention.
Figure 5 schematically illustrates a modular cooking apparatus in accordance with an embodiment of the present invention.
Figures 6, 7a, 7b, 7c schematically illustrates transportation modules according to the present invention.
Figures 8a, 8b, 8c schematically illustrates part of the modular cooking apparatus in accordance with an embodiment of the present invention.
Figures 9a, 9b, 9c schematically illustrates part of the operating arm and product container according to the present invention.
Figures 10a, 10b, 10c schematically illustrates a cooked food storage module according to the present invention.
Figure 11 schematically illustrates a method for preparing food products.

### DETAILED DESCRIPTION

As illustrated in the figures, the sizes of the elements and regions may be exaggerated for illustrative purposes and, thus, are provided to illustrate the general structures of the embodiments. Like reference numerals refer to like elements throughout.

Exemplifying embodiments will now be described more fully hereinafter with reference to the accompanying drawings, in which currently preferred embodiments are shown. The invention may, however, be embodied in many different forms and should not be construed as limited to the embodiments set forth herein; rather, these embodiments are provided for thoroughness and completeness, and fully convey the scope of the invention to the skilled person.

In many of the figures a modular cooking apparatus is disclosed and to further explain the features of the invention a deep fat fryer has been chosen. However, it is clear that this is an exemplary modular cooking apparatus and other kitchen appliances may be exchanged with the examples herein in order to prepare other food products. For example, a modular and automatic pasta cooker is also envisioned and may be equally plausible.

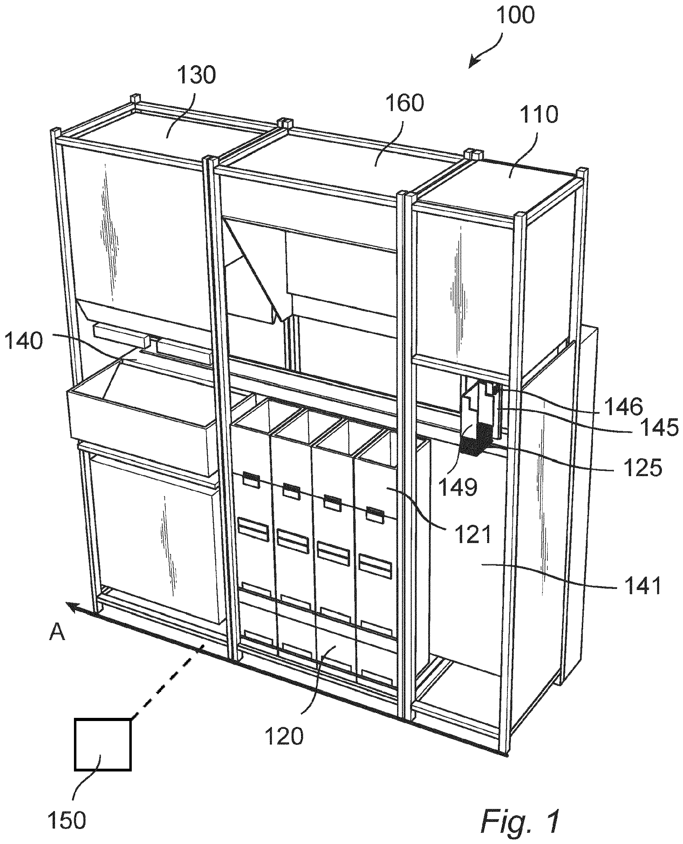

With reference to Figure 1 a modular cooking apparatus 100 in accordance with an embodiment of the present disclosure is shown.

The modular cooking apparatus 100 is configured to automatically prepare food products, for example in a professional restaurant environment. The modular cooking apparatus 100 comprises a dispensing module 110 configured to store food product to be prepared and to dispense an amount of food products. The modular cooking apparatus 100 further comprises a cooking module 120 configured to prepare the food products. The cooking module 120 in turn comprises a cooking container 121 configured to hold a cooking medium (not shown) and a product container 125 configured to hold food product and to be at least partially submerged in the cooking container 121 and the cooking medium. In the exemplary embodiment shown in Figure 1 the cooking module comprises four cooking containers 121 configured to hold cooking medium as well as four product containers 125. The cooking module 120 is depicted as a deep fat fryer and the cooking container 121 may be configured to hold heated oil for cooking the food products submerged in the product containers 125. It is clear that the cooking module 120 may comprise any number of cooking containers 121 and product container 125. For example, a plurality of product containers 125 may be configured to be submerged in the same cooking container 121.

The modular cooking apparatus 100 in Figure 1 further comprises one cooked food storage module 130 configured to receive and store the prepared food products. Further, the modular cooking apparatus 100 comprises a transportation module 140. The transportation module 140 comprises a conveying module 141 extending between the dispensing module 110, the cooking module 120 and the cooked food storage module 130. Further, the transportation module comprises an operating arm 145 movably arranged along the conveying module. The operating arm 145 comprises an engaging means 146 for releasably engaging the product container 125 for moving the product container 125 between the dispensing module 110, cooking module 120 and cooked food storage module 130. The modular cooking apparatus 100 further comprises a control unit 150 configured to control a food preparation process of the food products by controlling an operation of all or some of the dispensing module 110, cooking module 120, cooked food storage module 130 and transportation module 140.

In general, the invention idea relates to an automatic cooking system where an operating arm 145 is movable between different modules in order to receive food products, place the food product for cooking, and dispose of food product for automation of the cooking process in a kitchen environment. The modular cooking apparatus 100 is modular and may adapted to the needs of the customer by adding more of one or several modules. For example, some customers may require multiple dispensing modules 110 while other require multiple cooked food storage modules 130.

The dispensing module 110 may comprise refrigeration means in order to refrigerate the food products. The dispensing module 110 may for example be a freezer or refrigerator or both. Depending on the modular cooking apparatus 100 different dispensing modules 110 may be preferred. Further, the dispensing module may include a measuring means configured to measure a predetermined amount of food product. The dispensing module 100 may also include a dispensing mechanism in order to dispense the measure or dosed food product. In an exemplary embodiment, the dispensing module 100 comprises a dosing space which is defined by walls and two hatches. A first hatch arranged at a top of the dosing space configured to be opened in order to allow food product to enter into the dosing space, and a second hatch arranged at a bottom of the dosing space and configured to be opened to allow food product to leave the dosing space. In advantageous embodiments, the first hatch is made from variating material. For example, a tip portion of the hatch may be made from a softer more bendable material, such as rubber, for not damaging the food product when closing the hatch. In further embodiments, the dosing space may be varied in size in order to vary the amount of food product dosed and dispensed.

The cooking module 120 may be configured to cook any type of food. For example, it may be made for deep fat frying food products or for boiling food product. The cooking medium may be any medium such as oil or water for cooking and heating food products. The product containers 125 may be frying baskets or any other containers or pots for cooking or preparing food. The cooking module 120 can comprise at least one sensor and a temperature control configured to detect and maintain an appropriate temperature of the cooking medium which ensures optimal cooking according to the selected food product. Further, the cooking module 120 or modular cooking apparatus 100 may comprise a timer mechanism that may measure how long time the food product has been cooked for.

The prepared food products may be placed in the cooked food storage module 130 by the operating arm 145. The cooked food storage module 130 may be configured to momentarily store the prepared food product before a worker or user removes or serves the food product. In an advantageous embodiment, the cooked food storage module 130 comprises two slanted surfaces for guiding the food to a service area. The first slanted surface may receive the food product from the operating arm 145 and guide it towards the second slanted surface. The second slanted surface may guide the food product towards the service area. By providing these slanted surfaces the standard of first in first out can be applied which ensures that less food is wasted. The cooked food storage module 130 may further include some sort of heating means. The heating means may be configured to maintain a temperature of the food products stored in the cooked food storage module. The heating means may for example be infrared lamps or a hot air flow or any other conventional heating means. A hot air flow is also known as air convection and it may for example be coming from below the modules or from the back of the modules. In Figure 1 the cooked food storage module 130 is depicted with heating lamps, for example infrared lamps.

The dispensing module 110, cooking module 120 and cooked food storage module 130 may be arranged along an axis A. The transportation module 140 may be arranged behind the other modules. The operating arm 145 may be configured to extend into the vicinity of the dispensing module 110, cooking module 120 and cooked food storage module 130 from behind in order to move the product container 125 for enabling the food preparation process. By placing the transportation module 140 behind the other modules the modular cooking apparatus 100 is made less intrusive in a kitchen environment.

The conveying module 141 of the transportation module 140 may be configured to move the operating arm in a first, substantially horizontal, direction HD and in a second, substantially vertical, direction VD. Any means for moving the operating arm 145 may be used. As an example, the conveying module 141 may comprise a belt conveyor that may be attached to the operating arm 145 for moving it in the first direction HD. Further, a linear actuator, such as for example a rack and pinion linear actuator, may be used to move the operating arm in the second direction VD Further, the transportation module 140 and/or the operating arm 145 may include a second belt conveyor configured to rotate the operating arm about a rotational axis. By rotating the operating arm 145 the food product kept in the product container 125 can be disposed in the cooked food product container. The engaging means of the operating arm 145 may for example be a magnet for releasably engaging the product container 125. The conveyor belts and/or linear actuators used to move the operating arm 145 may be connected to motors, for example electrical motors, in order to actuate the movement of the operating arm 145. The motors may be controlled by the control unit 150.

The operating arm 145 further comprises a food product conveyor 149 configured to guide food products in and out of the product container 125. The food product conveyor 149 matches the size of the product container 125 in order to guide all of the food products in or out of it. The food product conveyor 149 may be shaped from a metal sheet.

The modular cooking apparatus 100 may further comprise a ventilation module 160 for providing ventilation for the modular cooking apparatus 100. The ventilation module 160 may for example be placed above the cooking module 120 and adapted to be fluidly connected to the modular cooking apparatus 100 for removing at least some of the air or vapor inside the modular cooking apparatus 100 during operation. While using a cooking module 120 the air may get warmed and/or at least partially filled with residual products such as water vapor or similar. A ventilation module 160 may be used to diminish the negative effects of this. The ventilation module 160 may be connected to a ventilation system in the restaurant for expelling the ventilated air to outside the restaurant area.

The modular cooking apparatus 100 further comprises a control unit 150 configured to control a food preparation process of the food products by controlling an operation of at least one of the dispensing module 110, the cooking module 120, the cooked food storage module 130 and the transportation module 140. The control unit 150 may be any control unit 150 and may be integrated in the modular cooking apparatus or a separate unit. A user may be able to insert different options into the control unit 150 in order to start, stop or make different choices regarding the food preparation process.

Since the modular cooking apparatus 100 will prepare food products automatically a user or kitchen employee does not need to intervene during the food preparing process. In order to make the modular cooking apparatus 100 even less intrusive a glass door may be added in front of all or some of the modules. A glass door may for example shield from spilled cooking medium or vapor from the cooking process. It may further lower any sound made from the modular cooking apparatus 100.

The modular cooking apparatus 100 may be configured to have different operating modes. As a first example the modular cooking apparatus 100 may have an automatic mode where an operator orders the desired amount of food product from a touchscreen TS by clicking for example "1 basket of onion rings". The touchscreen TS may be connected to the control unit 150. The food product may then be automatically dispensed by the dispensing unit 110, cooked in the cooking module 120 and then poured into the cooked food storage module 130. A second operating mode may be a programmed automatic mode which launches cycles in autonomy according to pre-configured programming. For example, the modular cooking apparatus may be programmed to cook a preset number baskets of french-fries every 10 minutes. The modular cooking apparatus 100 may also have a manual mode where the operator inserts the quantity and type of food product to be cooked, however the modular cooking apparatus 100 will still prepare the food product automatically.

It is further envisioned that the cooked food storage module 130 may comprise a seasoning module (not shown in Figure 1). The seasoning module may be configured to automatically dispense seasoning onto the prepared food product as the prepared food product is dispensed by the operating arm 145 into the cooked food storage module 130. The seasoning module may be located above the first slanted surface and configured to dispense seasoning at the same time as the prepared food product is poured onto the first slanted surface. The seasoning module may be configured to dispense any seasoning, such as salt or pepper. The seasoning module may be made by a basket including at least one hole holding spice. The spice or seasoning may then be dispensed by vibration or rotation. The seasoning module may be refillable by an operator. The operation of the seasoning module may be controlled by the control unit 150.

Additional features and variations of the modular cooking apparatus 100 at its different modules will further be explained with regards to the following figures.

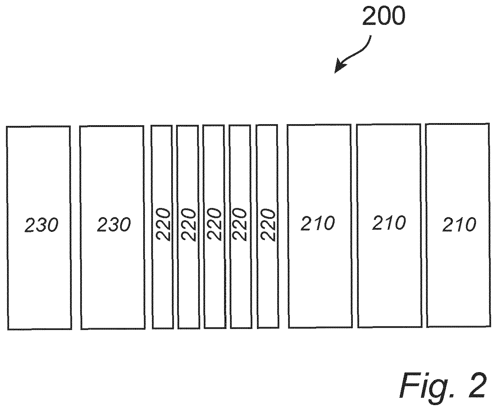

With reference to Figure 2 a modular cooking apparatus 200 in accordance with an embodiment of the present disclosure is shown.

Figure 2 is meant to highlight the modularity of the modular cooking apparatus 200 and may comprise any of the features discussed in relation to any of the other figures. In Figure 2 the modular cooking apparatus 200 includes three dispensing modules 210, five cooking modules 220 each having a cooking container and a product container and two cooked food storage modules 230. The transportation module cannot be seen in the schematical figure but extends behind the other modules. Depending on the needs of the specific restaurant different configurations of modules may be used in order to create the modular cooking apparatus 200.

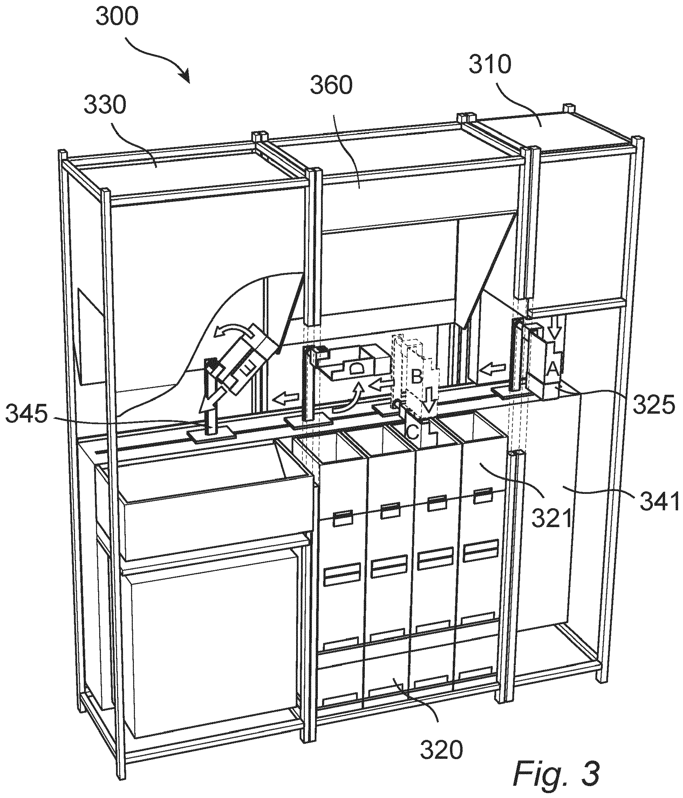

With reference to Figure 3 a modular cooking apparatus 300 in accordance with an embodiment of the present disclosure is shown.

The modular cooking apparatus 300 in figure 3 may include any feature as discussed in relation to the other Figures. Figure 3 discloses different positions of the operating arm 345 and is meant to disclose the possible movement of the operating arm 345 throughout the modular cooking apparatus 300.

Figure 3 shows the operating arm 345 in different positions named A, B, C, D and E. In all of these positions the operating arm 345 may or may not be engaged to the product container 325.

Position A may correspond to when the operating arm 345 is in an idle position, either when the operating arm 345 is waiting for food product to be prepared in a cooking container 321 or when the modular cooking apparatus 300 is not in use. Further, position A may correspond to when the operating arm 345 has moved to the dispensing unit with a product container 325 to catch food product dispensed by the dispensing module 310 and move to the cooking module 320.

Position B may correspond to a position prior or after to leaving or picking up a product container 325 from a cooking container 321. It is understood that position B may be over any cooking container 321 of the cooking module 320. In the present example, the cooking module 320 has four cooking containers 321 all capable of cooking food products and all may have a corresponding product container 325 movable by the operating arm 345. Position C may correspond to a position when leaving or picking up a product container 325 from a cooking container 321. After a product container 325 without food product has been picked up, the operating arm may go to position A via position B. After a product container 325 with food product has been picked up, the operating arm may go to position D via position B.

Position D may correspond to when the operating arm 345 has started rotating prior to depositing the food product in the cooked food storage module 330. After position D the operating arm can be moved into the cooked food storage module 330 and the rotation continued until it reaches position E and the food product is delivered to the cooked food product storage module 330.

It is understood that the positions are exemplary and other positions and moving patterns are possible for the operating arm 345. The operating arm 345 may be controlled by a control unit.

In other words, the cooking process may be described as follows with regards to Figure 3:
1. The dispensing module 310 may be loaded with product at the beginning of the day. The food product is stored and kept at a preservation temperature. The cooking module 320 may be turned on for heating the cooking medium in preparation of cooking.
2. A cooking cycle is launched, for example by a time indication or input by an operator. The operating arm 345 then moves from position A to position B and then position C in order to engage a product container 325.
3. Once the product container 325 is engaged, it moves from position C to position A and food product is dispensed into the product container 325. The operation arm 345 the returns to position C and disengages the product container 325. Before disengaging the product container 325 the operating arm 345 may shake the product container 325 in order to avoid the food product to stick together.
4. The operating arm 345 may be moved away while the food product is prepared, for example back to position A or to another product container 325 to start another cooking procedure simultaneously.
5. The operating arm 345 returns to position C in order to get the product container 325 when the food product is properly cooked. While removing and raising the product container 325 the operating arm 345 may shake the product container 325 for any excess cooking medium to be released from the food product.
6. The operating arm 345 is moved to position D and then position E in order to dispense or leave the food product at the cooked food storage module 330. The operating arm 345 may then return to an idle position at position A after leaving the product container 325. Alternatively, the operating arm 345 may move to position A together with the product container 325 in order to repeat the process.

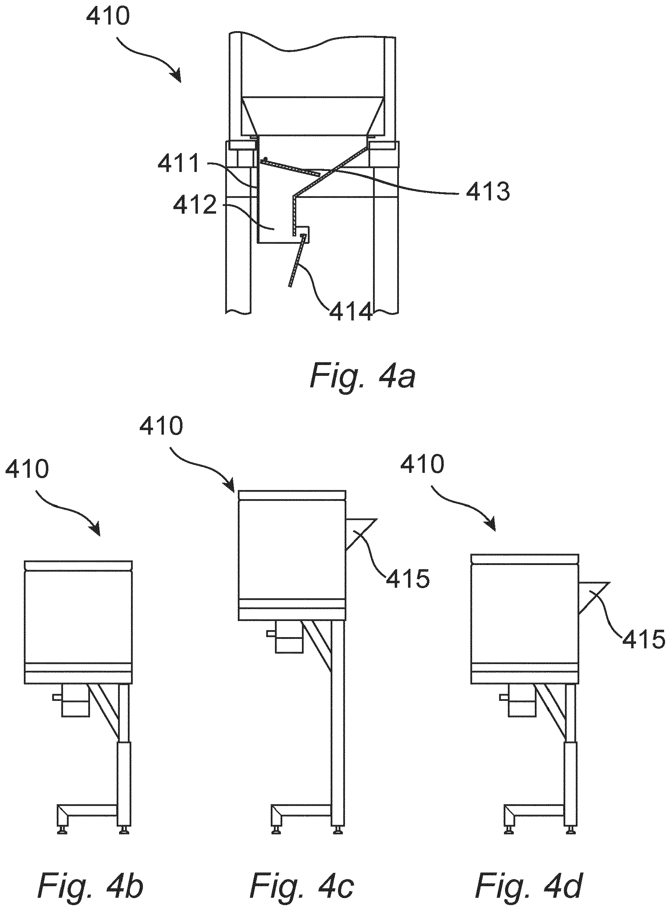

With reference to Figure 4a a dispensing module 410 that may be part of a modular cooking apparatus according to the invention is disclosed.

The dispensing module 410 may comprise refrigeration means (not shown) for refrigerating the food product stored therein. The refrigeration means may for example freeze the food product, for example if the modular cooking apparatus is a freezer to fryer appliance, or only chill the product. The dispensing module 410 may be configured to hold frozen or fresh product depending on the modular cooking apparatus.

The dispensing module 410 may further comprise a measuring means 411 configured to measure and dispense a predetermined amount of the food product. In the example of Figure 4a the measuring means 411 includes a dosing space 412 configured to hold a specific volume of food product. The dosing space 412 is formed by a first hatch 413 arranged at a top of the dosing space and a second hatch 414 arranged at a bottom of the dosing space. The first hatch 413 is configured to be opened in order to allow food product to enter into the dosing space 412. As seen in Figure 4, the food product may be stored in the dispensing module 410 above the measuring means 411 and when the first hatch 413 is opened the food product may enter the dosing space 412. The second hatch 414 is configured to be opened in order to allow the food product to leave the dosing space 413 and also the dispensing unit. The dosing space 412 may is some embodiments be changed in order to hold different amounts of food product by altering the volume of the dosing space 412. This may for example be done by moving the hatches 413, 414 or the walls enclosing the dosing space 412. Other measuring means, such as scales or other conventional measuring means, may also be used.

The first hatch 413 may further be made from a combination of material. In case the first hatch 413 is only made from a hard material, such as a metal, the food product may be damages or broken as the first hatch 413 closes. It is therefore envisioned that part of the first hatch 413 is made from a softer material, such as rubber, in order to mitigate this effect. With reference to Figures 4b, 4c, and 4d dispensing modules 410 with different designs are shown. The dispensing module 410 may for example be lowerable, as the example in Figure 4b, for allowing food product to be loaded into the dispensing module 410 from the top of the dispensing module 410. The dispensing module 410 may also include a front door 415 for loading food product into the dispensing module 410 as shown in Figure 4c. As a last example, as shown in Figure 4c, the dispensing module 410 may be both lowerable and include a front door 415.

All operation of the dispensing unit 410 may be controlled by a control unit as disclosed herein.

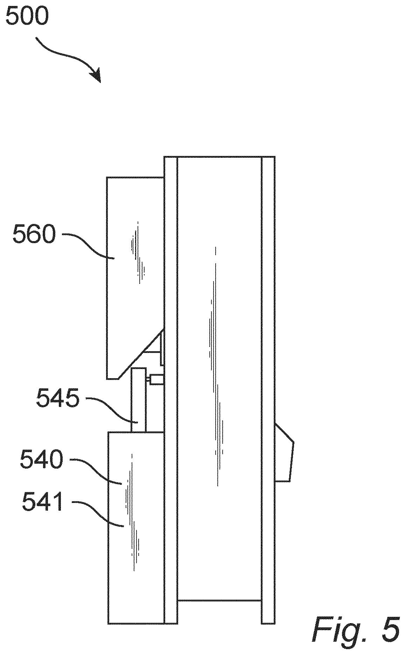

With reference to Figure 5 a modular cooking apparatus 500 in accordance with and embodiment of the present invention is shown.

The modular cooking apparatus 500 of Figure 5 may include any feature discussed within this disclosure. The modular cooking apparatus 500 is shown from the side in order to further clarify some plausible features. As seen in Figure 5 the transportation module 540 may be placed behind the different modules and include an operating arm 545 extending from the conveying module 541 and into the vicinity of the other modules in order to move the product container. Further, as seen in Figure 5 the modular cooking apparatus 500 may comprise a ventilation module 560. The ventilation module 560 may be connected to an external exhaust in order to remove the air, steam or the like.

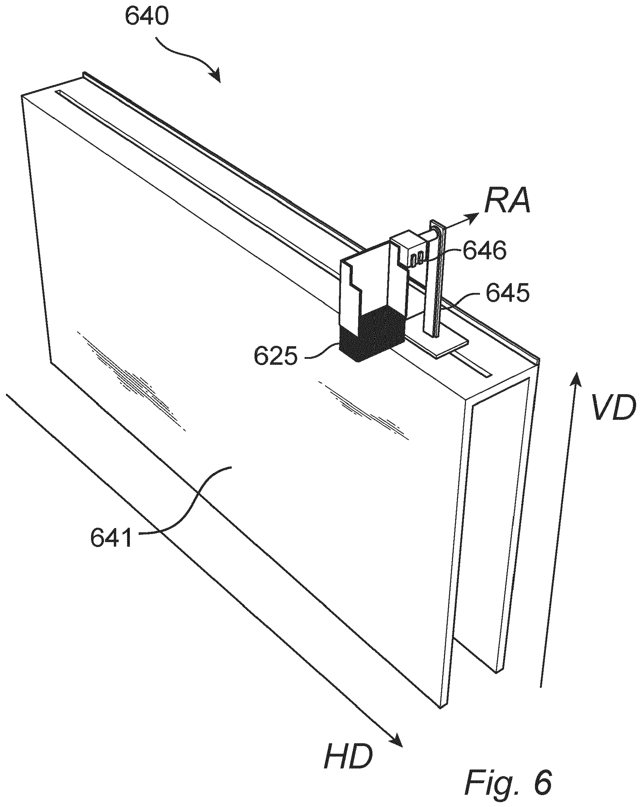

With reference to Figure 6 a transportation module 640 that may be part of a modular cooking apparatus according to the invention is disclosed.

The transportation module 640 includes a conveying module 641 and an operating arm 645 extending out of and being connected to the conveying module 645. The conveying module 641 may for example be placed behind modules such as a dispensing module, cooking module and cooked food storage module of a modular cooking apparatus according to the present disclosure. The operating arm 645 may be configured to extend out of the conveying module and reach into the vicinity of the other modules. In Figure 6 this is further illustrated by the product container 625 of a cooking module (not shown) that the operating arm is engaged to. The operating arm 645 is configured to releasably engage the product container 625 for moving it through the modules of a modular cooking apparatus.

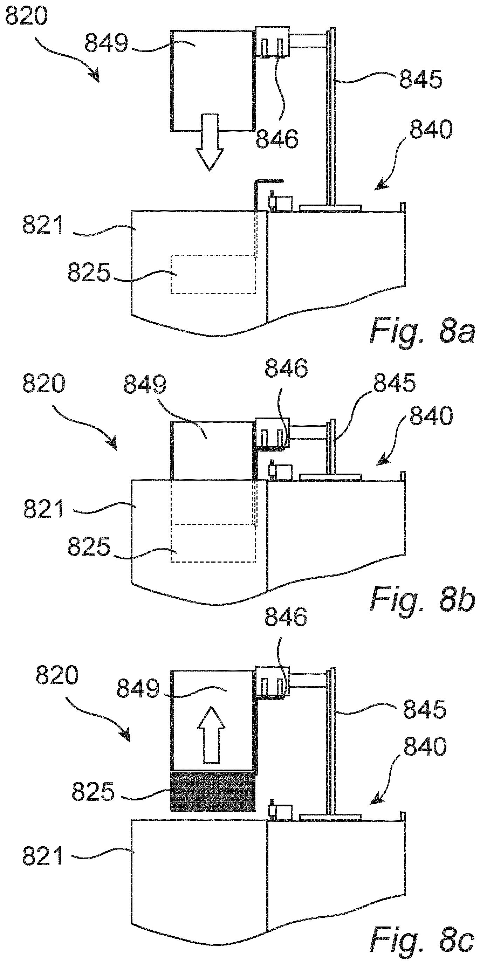

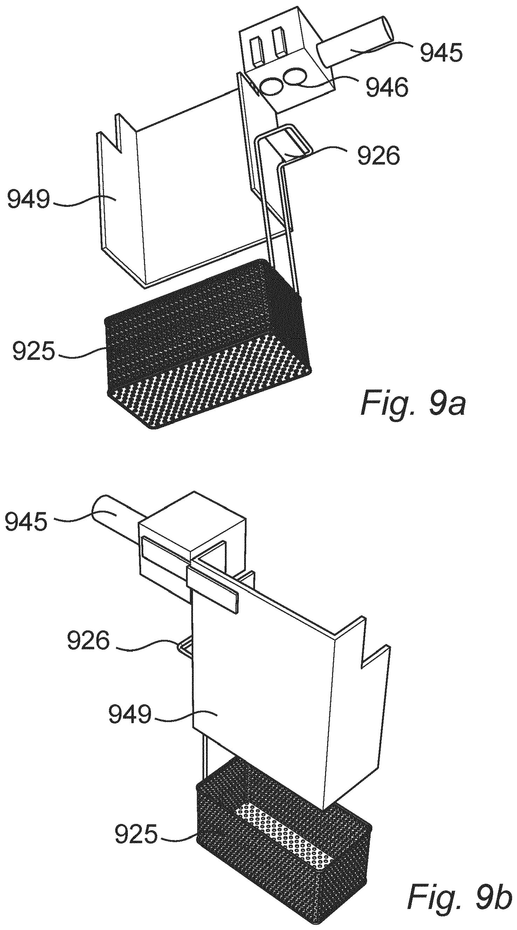

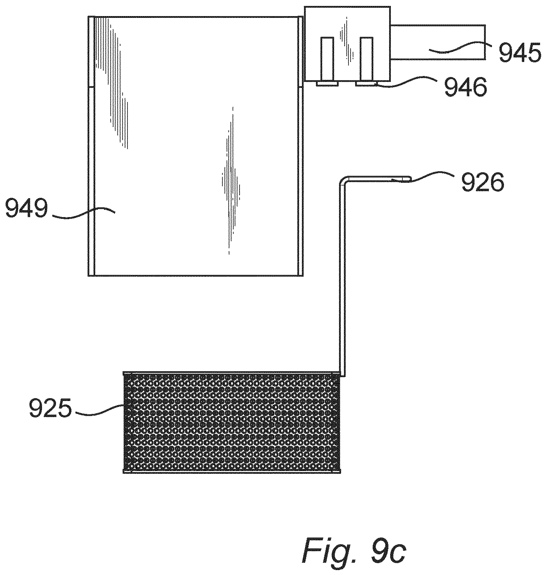

The operating arm 645 may include engaging means 646 in order to engage the product container 625. In preferred embodiments, the engaging means is at least one magnet 646 as will be discussed further in relation to Figures 8 and 9.

The operating arm 645 may be configured to move in a first direction HD and a second direction VD. The first direction HD may be substantially horizontal, and the second direction VD may be substantially vertical. Further, the operating arm may be configured to be rotated about a rotational axis RA.

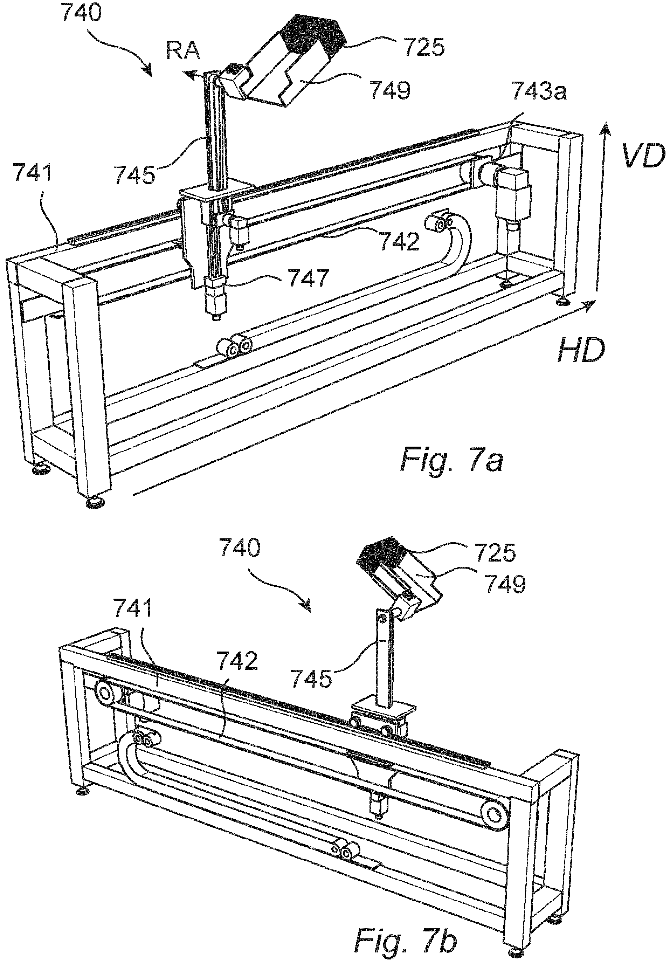

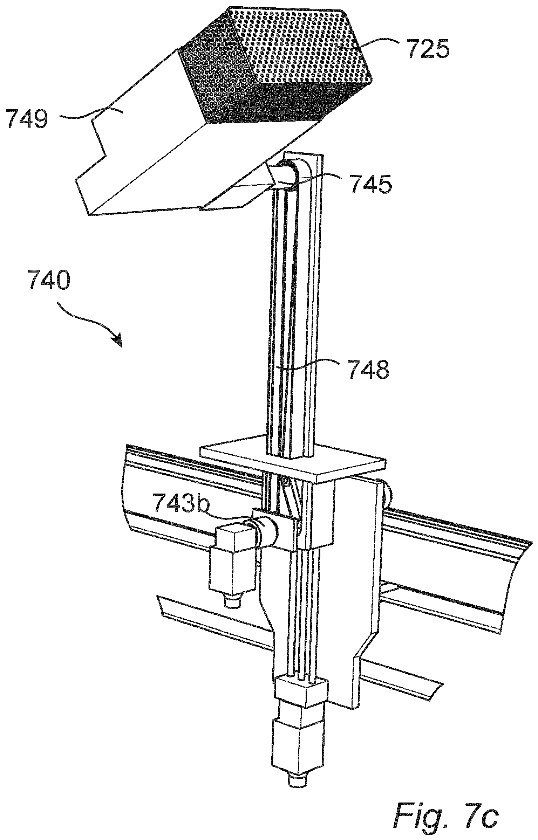

In order to actuate the different movements, any conventional means may be used. Further details regarding how the operating arm 645 may be moved are disclosed in relation to Figures 7a, 7b, 7c.

With reference to Figures 7a and 7b a transportation module 740 that may be part of a modular cooking apparatus according to an embodiment of the present invention is shown.

The transportation module 740 comprises a conveying module 741 and an operating arm 745. In Figures 7a and 7b the operating arm 745 engages a product container 725, however it is understood that this is merely for illustrative purposes and that the product container 725 can also be released by the operating arm 745.

The conveying module 741 shown in Figure 7a and 7b comprises a first belt conveyor 742 configured to move the operating arm 745 in the first direction HD. The belt conveyor 742 is attached to a motor 743 and to the operating arm 745 for actuating movement of the operating arm 745 along the first direction HD and along the conveying module 741. The belt conveyor 742 can ensure that the operating arm 745 can be moved in the first, substantially horizontal, direction HD so that it can be moved between the different modules of a modular cooking apparatus. The motor 743 may be any suitable motor, such as an electrical motor. The motor 743, and thusly the horizontal movement of the operating arm 745, may be controlled by a control unit. It is clear that any other means for actuating a horizontal movement of the operating arm 745 is also plausible.

The transportation module 740 further comprises a linear actuator 747 configured to move the operating arm in a second, substantially vertical, direction VD. The linear actuator 747 shown in Figure 7a and 7b is a so called rack and pinion linear actuator 747. The rack and pinion actuator uses the movement of a circular gear, pinion, engaging a linear gear, rack, for translating a rotational movement into a linear movement. The gears are not shown in the figures. It is further understood that other means for actuating a linear motion of the operating arm 745 are possible, for example by a conveyor belt or similar. The circular gear, or pinion, may be connected to a second motor, such as an electrical motor, for driving the circular gear and thus the linear gear and thusly causing linear motion of the operating arm 745. The second motor, not shown, may be controlled by a control unit as described within this disclosure.

The operating arm 745 can thusly be moved both horizontally and vertically. This ensures that the operating arm 745 can be used to transport the product container 725 between the different modules of the modular cooking apparatus, and the operating arm 745 can further at least partially submerge the product container 725 in the cooking container and cooking medium for preparing the food product.

With reference to Figure 7c part of a transportation module 740 that may be part of a modular cooking apparatus according to an embodiment of the present invention is shown.

The transportation module 740 may include any feature described herein, especially in relation to Figures 7a and 7b. Further, the transportation module 740 shown in Figure 7c comprises a second conveyor belt 748 configured to rotate the operating arm about a rotational axis RA. The second conveyor belt 748 is attached to a third motor 749, for example an electrical motor 749, for actuating a movement of the belt and thusly rotating the operating arm 745. Any other means for rotation may be used for rotating the operating arm 745. By rotating the operating arm 745 the food product in the product container 725 may slide or be guided out of the product container 725, for example for deposing the food product in a cooked food storage module as described within this disclosure.

The operating arm 745 shown in Figures 7a, 7b and 7c further comprises a food product conveying means 749. The food product conveying means 749 is attached to the operating arm 745 and configured to guide food products into and out of the product container 725. When the operating arm 745 is rotated, the food product may slide on the food product conveying means 749 out of the product container 725 and into a designated place, such as a cooked food product storage module. The food product conveying means 749 may be a metal sheet arranged at one end of the operating arm and configured to, when engaging and disengaging the product container, be at least partially submerged in the cooking medium. This may ensure that no cooking medium is accidentally spilled or expelled towards a person in the vicinity of the modular cooking apparatus. The food product conveying means 749 may have a U-shape leaving one side open, this shape is easy to manufacture and since the food product may, in certain embodiments, only be expelled in one direction there may be no need for covering all sides of the product container 725. The food product conveying means 749 may be configured to match a top area of the product container 725 in order to ensure that no food products are spilled.

Figures 8a, 8b and 8c show how the operating arm 845 can engage and disengage with the product container 825.

The transportation module 840 and cooking module 820 shown in Figure 8a, 8b, and 8c may have any features described in relation to the other Figures.

In Figure 8a the operating arm 845 has been placed above the cooking module 820 and one product container 825. The product container 825 is in Figure 8a submerged in the cooking container 821 and the cooking medium (not shown). Figure 8a may show when the product container 825 is to be picked up by the operating arm 845 in order to be moved to the dispensing unit for getting filled with food product. Figure 8a may also show when the product container is to be picked up and moved to the cooked food storage module for depositing the prepared food product. The operating arm 845 may be moved horizontally to a position above the product container 825.

In Figure 8b the operating arm 845 has been moved vertically towards the product container 825 so that it can engage the product container. The operating arm comprises an engaging means 846, in Figures 8a, 8b and 8c depicted as two magnets. The magnets 846 may be any type of magnets for engaging the product container 825. For example, the magnets 846 may be permanent magnets. In this example, the operating arm 845 or any other structure may need a releasing mechanism for mechanically disengaging the product container for depositing it in the cooking container 821. In other embodiments, the magnets 846 may be electromagnets 846. Electromagnets may be preferable since they can be turned on and off at will for engaging or disengaging the product container 825. Most preferably the engaging means 846 may be electropermanent magnets. An electropermanent magnet is a magnet that is a type of permanent magnet in which the external magnetic field can be switched off by a pulse of electric current. When no current runs through the electropermanent magnet it acts as a permanent magnet, but when a current is applied the magnet loses some or all of its magnetism. This may be advantageous to use for the engaging means 846. Compared to an electromagnet which is magnetic when a current is applied, less power is needed since current is only needed when releasing the product container 825. Further, an electropermanent magnet may be advantageous in case of a power outage or power failure since the engaging means 846 will stay functioning. This can ensure that the product container 825 is not dropped into the cooking medium which may be a potential safety risk. In Figure 8c the product container 825 is lifted out of the cooking container 821 and can then be moved by the operating arm 845 to any of the other modules.

The operating arm 845 or the transportation module 840 or conveying module 841 may include a means for rotating the operating arm 845 about a rotational axis. For example, a conveying belt may be connected to a motor and to a rotational joint in the operating arm 845 which may cause a rotating movement. By moving the conveyor belt the operating arm can thusly be rotated. By alternating the movement of the conveyor belt the operating arm 845 can be shaken. Shaking the operating arm 845 may be advantageous when it is engaged to the product container 825. For example, shaking the operating arm 845 and the product container 825 when the product container 825 is submerged in the cooking medium can ensure that the food product does not stick together. Further, shaking the operating arm 845 and the product container 825 when lifting the product container 825 out of the cooking medium can ensure that any excess cooking medium stuck to the food product or product container 825 is released down into the cooking container 821 again.

With regards to Figures 9a, 9b and 9c part of the operating arm 945 and the product container 925 are shown.

The operating arm 945 in Figures 9a, 9b and 9c comprises engaging means 946 comprising of two electropermanent magnets. The magnets 946 are configured to engage a handle 926 of the product container. The handle 926 may be made from a ferromagnetic material, such as a metal. In order to release or disengage from the handle 926 a current can be applied in or over the electropermanent magnets 946.

The operating arm 946 further comprises a food product conveying means 949. The food product conveying means 949 is configured to guide the food product into and out of the product container 925. The food product conveying means 949 of Figures 9a, 9b and 9c matches a top are of the product container 925 in order to ensure that all food products can be smoothly guided out of or into the product container 925. The food product conveying means 949 may be made from any suitable material, for example bended or formed out of a metal sheet. The food product conveying means 949 in Figure 9a, 9b and 9c has a U-shape in order to save material. The food product conveying means 949 may further help in shielding from cooking medium spill when the product container is lifted out of or sunken into the cooking medium of the cooking container. The food product conveying means 949 may be straight, as in Figures 9a, 9b or 9c, or have a tapered shape as disclosed in Figures 8a, 8b and 8c. Other shapes are also possible.

The operating arm 945 may be configured to rotate around a rotation axis. When rotating the operating arm 945 the food product may exit the product container 925 and be guided by the food product conveying means 949 into a suitable location.

As can be seen in Figures 8a, 8b, 8c, 9a, 9b and 9c the operating arm can be made to match the shape of the product containers handle. The operating arm may for example form an L-shape, a first part extending out along the rotational axis and a second part extending vertically down being shaped by the food conveying means. The product container with an L-shaped handle can then easily match the operating arm which is advantageous when moving the product container.

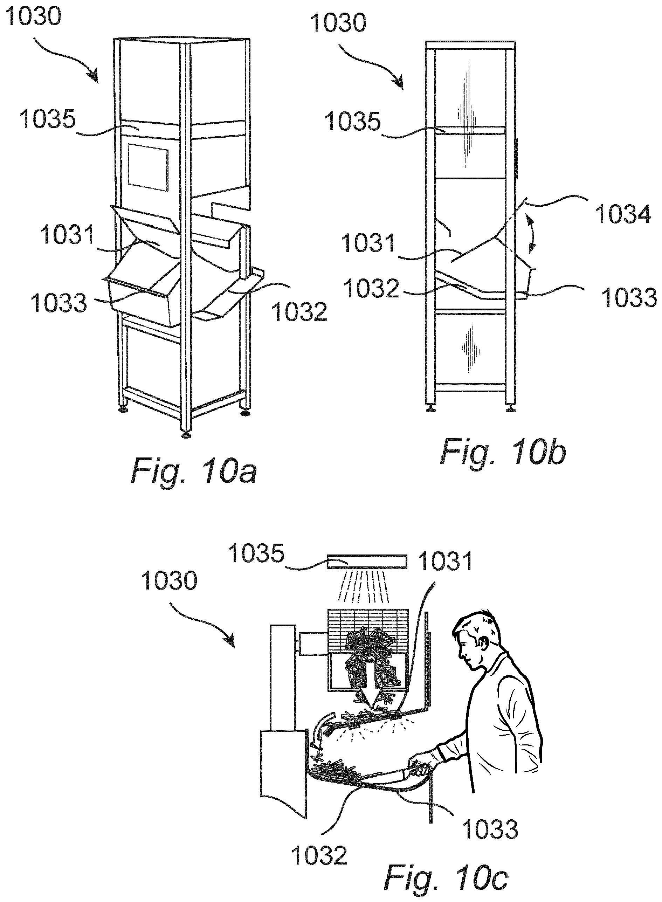

With regards to Figures 10a, 10b and 10c a cooked food storage module 1030 is shown.

The cooked food storage module 1030 is configured to receive and store the prepared food products. When the food products have been prepared in the cooking module the operating arm will lift up the product container and move it towards the cooked food storage module 1030. The operating arm may then be configured to leave, give, dispose, drop or hand over the food product to the cooked food storage module 1030. For example, in case the operating arm is rotatable the food product may be deposited into the cooked food storage module 1030 by rotating the operating arm and thusly the product container in order to empty the product container.

The product container in Figures 10a, 10b and 10c comprises a first slanted surface 1031. The first slanted surface 1031 may be configured to receive the prepared food product from the product container and guide it towards a second slanted surface 1032. The second slanted surface 1032 may be configured to receive the prepared food product from the first slanted surface 1031 and to guide it to a service area 1033. A restaurant worker may then take the prepared food product from the service area 1033 for serving. As can be seen in Figures 10a, 10b and 10c the slanted surfaces are positioned so that when food is placed on the first slanted surface 1031 it will be guided towards the service 1033 in a way that the standard first in first out is employed. As an example, if a first batch of fried potatoes are placed on the first slanted surface 1031 it will be guided via the second slanted surface 1032 to the service area 1033. If a second batch of fried potatoes are placed on the first slanted surface 1031 before the first batch is removed from the service area, it will be guided to the service area 1033 but end up behind the first batch. This ensures that the food prepared first is served first, which ensures for less food waste.

The cooked food storage 1030 may further comprise some sort of heating means (not shown) for keeping a temperature of the prepared food products. This may for example be infrared lights of a warm air stream or any other conventional heating means.

As can be seen in Figure 10b, the cooked food storage 1030 may include a door 1034 that can be opened and closed by either the control unit or a kitchen employee for taking prepared food products from the cooked food storage 1030.

The cooked food storage module 1030 shown in Figures 10a, 10b and 10c further comprises a seasoning module 1035. The seasoning module 1035 is configured to dispense seasoning or spices onto the prepared food product. As shown in Figure 10c the seasoning module 1035 may dispense seasoning onto the prepared food product as the food product is poured onto the first slanting surface 1031. This may ensure that the seasoning is added to the prepared food product while it slides down the first slanted surface 1031. Further, thanks to the movement of the food product on the first and second slanted surface 1031, 1032 the seasoning may be mixed well into the food product. The seasoning module 1035 may be an optional module added to the cooked food storage module 1030 depending on the needs of the specific user. The seasoning module 1035 may hold any type of seasoning, such as salt, pepper, or the like.

The seasoning module 1035 may be arranged in the cooked food storage module 1030 above the first slanted surface 1031. The seasoning module 1035 may be controlled by a control unit for automatically adding seasoning to the prepared food product. The seasoning module 1035 may for example be a basket or drawer like addition with at least one hole for holding seasoning. The seasoning or spice may be dispensed through different dispensing methods.

For example, the seasoning module 1035 may be adapted to vibrate in order to dispense seasoning. Further, the seasoning module 1035 may be configured to rotated in order to dispense seasoning. Other means for dispensing the seasoning are possible.

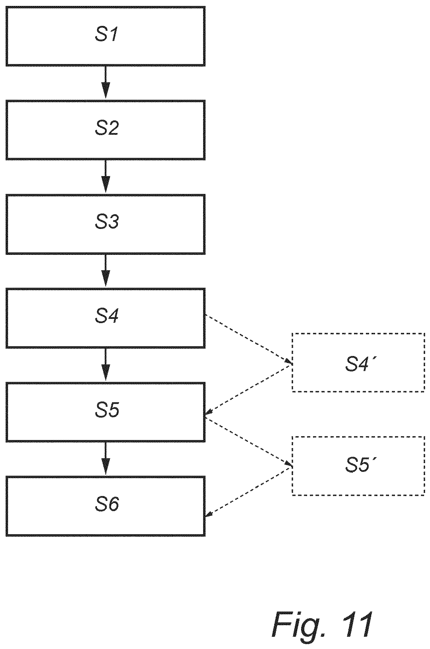

With regards to Figure 11 a method 1100 for preparing food products is shown.

The method 1100 may be implemented in a control unit of a modular cooking apparatus comprising any features presented with regards to the previous Figures. The control unit may be an integral or separate part from the modular cooking apparatus.

The method 1100 comprises a step of receiving (S1) an indication to start a food preparation process. The indication may be any type of indication. For example, an employee or chef or person may press a start button on a display. The method 1100 may also start due to a timer going off or any other indication. The method further comprises the step of causing (S2) an operating arm to engage a product container and move the product container to a dispensing module. The operating arm may collect a product container from a cooking module and move it to the dispensing unit and below a dispensing opening. In a subsequent step the method 1100 comprises the step of causing (S3) the dispensing module to dispense an amount of food products into the product container. The amount may be predetermined or set by a user on a display. The food product may be any type of food product depending on the modular cooking apparatus. For example, the food product may be french-fries or pasta. The method 1100 further comprises the step of causing (S4) the operating arm to move the product container to a cooking module and at least partially submerging the product container in a cooking medium of a cooking container of the cooking module. By submerging the product container, and thusly the food product in a cooking medium, such as hot oil or water, the food product can be cooked and prepared. The method 1100 further comprises the step of causing (S5) the operating arm to move the product container out of the cooking container and from the cooking module to a cooked food storage module. When the food product is sufficiently cooked, may be determined by a temperature sensor or timer or the like, it may be moved by the operating arm. The method further comprises causing (S6) the operating to deposit the food products in the cooked food storage module. For example, the step of causing (S6) the operating arm to deposit the food product in the cooked food storage module may be by rotation of the operating arm about a rotational axis so that the food products slide out of the product container.

The method 1100 may further comprise a step of causing (S4') the operating arm to shake the at least one product container such that food products held in the at least one product container are prevented from sticking to each other. This may be done after the product container has been at least partially submerged in the cooking medium and the cooking container.

The method 1100 may further comprise a step of causing (S5') the operating arm to shake the at least one product container such that an excess amount of cooking medium is removed from the prepared food product. This may be done after lifting the product container out of the cooking container after the food product has been prepared.

Although features and elements are described above in particular combinations, each feature or element can be used alone without the other features and elements or in various combinations with or without other features and elements.

Additionally, variations to the disclosed embodiments can be understood and effected by the skilled person in practicing the claimed invention, from a study of the drawings, the disclosure, and the appended claims. In the claims, the word "comprising" does not exclude other elements, and the indefinite article "a" or "an" does not exclude a plurality. The mere fact that certain features are recited in mutually different dependent claims does not indicate that a combination of these features cannot be used to advantage.

## Claims

1. A modular cooking apparatus (100) for automatically preparing food products comprising:
at least one dispensing module (110) configured to store food products to be prepared and to dispense an amount of food products,
at least one cooking module (120) configured to prepare the food products, wherein the at least one cooking module comprises,
a cooking container (121) configured to hold a cooking medium,
a product container (125) configured to hold food product and to be at least partially submerged in the cooking container and the cooking medium in order to prepare the food products,
at least one cooked food storage module (130) configured to receive and store the prepared food products,
a transportation module (140) comprising,
a conveying module (141) extending between the at least one dispensing, cooking and cooked food storage module, and
an operating arm (145) movably arranged along the conveying module, wherein the operating arm comprises an engaging means (146) for releasably engaging the product container for moving the product container between the dispensing, cooking and cooked food storage module, and
a control unit (150) configured to control a food preparation process of the food products by controlling an operation of all or some of the dispensing, cooking, cooked food storage and transportation modules.

2. The modular cooking apparatus according claim 1, wherein the conveying module comprises a first belt conveyor (742) configured to move the operating arm in a first, substantially horizontal, direction (HD), and/or wherein the conveying module further comprises a linear actuator (747) configured to move the operating arm in a second, substantially vertical, direction (VD), and wherein the operating arm is attached to the linear actuator.

3. The modular cooking apparatus according to claim 1 or 2, wherein the transportation module further comprises a second belt conveyor (748) configured to rotate the operating arm about a rotational axis (RA).

4. The modular cooking apparatus according to any one of the preceding claims, wherein the operating arm further comprises a food product conveying means (149) configured to guide food products.

5. The modular cooking apparatus according to claim 4 while depending on claim 3, wherein the second belt conveyor of the conveying means is configured to rotate the operating arm about the rotational axis (RA) such that food product in the product container is guided out from the product container through the food product conveying means.

6. The modular cooking apparatus according to any one of the preceding claims, wherein the transportation module is arranged behind the other modules.

7. The modular cooking apparatus according to any one of the preceding, wherein the dispensing module, cooking module and cooked food storage module are arranged along an axis A, and wherein the cooking module is arranged next to the dispensing module, and the cooked food storage module is arranged next to the cooking module along the axis A.

8. The modular cooking apparatus according to any one of the preceding claims, wherein the dispensing module comprises a measuring means (411) configured to measure and dispense a predetermined amount of the food product.

9. The modular cooking apparatus according to claim 8, wherein the measuring means includes a dosing space (412), a first hatch (413) arranged at a top of the dosing space configured to be opened in order to allow food product to enter into the dosing space, and a second hatch (414) arranged at a bottom of the dosing space configured to be opened to allow food product to leave the dosing space.

10. The modular cooking apparatus according to any one of the preceding claims, wherein the dispensing module further comprises refrigeration means configured to refrigerate the food products.

11. The modular cooking apparatus according to any one of the preceding claims, wherein the operating arm further comprises at least one magnet configured to engage the product container.

12. The modular cooking apparatus according to any one of the preceding claims, wherein the at least one cooked food storage module comprises a first slanted surface configured to receive the prepared food product from the product container and guide it towards a second slanted surface, wherein the second slanted surface is configured to guide the prepared food product to a service area.

13. The modular cooking apparatus according to any one of the preceding claims, wherein the at least one cooking module is two or more cooking modules, and/or wherein the at least one cooked food storage module is two or more cooked food storage modules, and/or wherein the at least one dispensing module is two or more dispensing modules.

14. A method (1100) for preparing food products, the method being implemented in a control unit of a modular cooking apparatus according to any one of the preceding claims, the method comprises the steps of:
a) receiving (S1) an indication to start a food preparation process,
b) causing (S2) an operating arm to engage a product container and move the product container to a dispensing module,
c) causing (S3) the dispensing module to dispense an amount of food products into the product container,
e) causing (S4) the operating arm to move the product container to a cooking module and at least partially submerging the product container in a cooking medium of a cooking container of the cooking module,
f) causing (S5) the operating arm to move the product container out of the cooking container and from the cooking module to a cooked food storage module,
g) causing (S6) the operating arm to deposit the food products in the cooked food storage module.

15. The method for preparing food products according to claim 14, further comprising a step subsequent to the step e) comprising:
e') causing (S4') the operating arm to shake the at least one product container, such that food products held in the at least one product container are prevented from sticking to each other,
and/or wherein the method further comprises a step subsequent to the step f) comprising:
f') causing (S5') the operating arm to shake the at least one product container, such that an excess amount of cooking medium is removed from the prepared food product.
